# EUROPÄISCHE PATENTSCHRIFT

(11) **EP 2 130 331 B1**
(45) Veröffentlichungstag und Bekanntmachung des Hinweises auf die Patenterteilung: **29.04.2015**
(21) Anmeldenummer: 08717642.6
(22) Anmeldetag: 12.03.2008
(51) Int. Cl.: H04L 12/701, H04L 12/751, H04L 12/707, H04L 12/703

(54) **VERFAHREN ZUM REKONFIGURIEREN EINES KOMMUNIKATIONSNETZWERKS**
METHOD FOR RECONFIGURING A COMMUNICATION NETWORK
PROCÉDÉ DE RECONFIGURATION D'UN RÉSEAU DE COMMUNICATION

(30) Priorität: 30.03.2007 DE 102007015449
(43) Veröffentlichungstag der Anmeldung: 09.12.2009
(73) Patentinhaber: Siemens Aktiengesellschaft, 80333 München (DE)
(72) Erfinder: KULKARNI, Vivek, 82008 Unterhaching (DE); NATHANSEN, Martin, 81679 München (DE); SFEIR, Elie, 80333 München (DE)
(86) Internationale Anmeldenummer: PCT/EP2008/052896
(87) Internationale Veröffentlichungsnummer: WO 2008/119626

(56) Entgegenhaltungen:
- US-A- 6 032 194
- US-A1- 2003 208 618
- US-B1- 7 177 946
- HANSEN K: "Redundancy Ethernet in industrial automation" 10TH IEEE INTERNATIONAL CONFERENCE ON EMERGING TECHOLOGIES AND FACTORY AUTOMATION, 22. September 2005 (2005-09-22), XP002495535
- CISCO: "Spanning Tree Protocol: Understanding Rapid Spanning Tree Protocol (802.1w)" INTERNET CITATION, [Online] 3. April 2005 (2005-04-03), XP002346572 Gefunden im Internet: URL:http://www.cisco.com/en/US/tech/tk389/ tk621/technologies_white_paper0 9186a0080094cfa.shtml> [gefunden am 2005-09-26]

## Beschreibung

Die Erfindung liegt auf dem technischen Gebiet der paketvermittelten Kommunikationsnetzwerke und betrifft ein Verfahren zum Rekonfigurieren eines Kommunikationsnetzwerks, in dem LANs, die verschiedene Netzwerkprotokolle einsetzen, miteinander verbunden sind.

Paketvermittelte Ethernet-Netzwerke (LAN = Local Area Network) werden sowohl im industriellen Umfeld als auch in Büroumgebung eingesetzt, wobei die hierbei an die Netzwerke gestellten Anforderungen sehr verschieden sind. Im Unterschied zur Büroumgebung müssen LANs im industriellen Alltag unter extremen Bedingungen, wie elektromagnetischen Störfeldern, hohen Betriebstemperaturen und mechanischen Beanspruchungen zuverlässig arbeiten. Da der Ausfall einer Produktionsanlage und die damit verbundenen Stillstandszeiten in der Regel mit hohen Kosten verbunden sind, kommt hinzu, dass in der industriellen Anwendung die Anforderungen an die Ausfallsicherheit höher sind als in Büroumgebung.

Für industrielle LANs werden aus diesem Grund robuste Komponenten eingesetzt, die schnelle Redundanzmechanismen ermöglichen, um so die Kosten im Fehlerfall möglichst gering zu halten. Zudem wird meist eine Ringtopologie für das Netzwerk gewählt, da diese bei einem Ausfall eines Datenlinks oder einer Brücke eine schnelle Rekonfigurationszeit von weniger als 500 ms ermöglicht. Als Netzwerkprotokolle werden für industrielle LANs gewöhnlich auf dem Ethernet-Standard basierende Standard- oder proprietäre Netzwerkprotokolle eingesetzt.

Demgegenüber sind LANs in Büroumgebung meist in Stern- oder Maschentopologie aufgebaut und setzen als Netzwerkprotokoll heutzutage in der Regel RSTP (RSTP = Rapid Spanning Tree Protocol) gemäß IEEE-Norm 802.1w ein.

US 2003/0208618 A1 betrifft ein fehlertolerantes Netzwerk zur Verbindung eines EDGE-Switches mit mehreren Access Switchen. Die Access Switches sind dabei untereinander ebenfalls über eine Datenverbindung verbunden, so dass bei Ausfall einer Verbindung zwischen EDGE-Switch und einem Access Switch die Verbindung über eine solche zusätzliche Verbindung zwischen zwei Access Switches aufrechterhalten werden kann.

US 7,177,948 B1 betrifft die Synchronisation eines Netzwerkes mit einem RSTP-Protokoll.

US 6,032,194 A offenbart ein Verfahren und eine Vorrichtung zur Rekonfiguration von Computernetzwerken, die im gesamten Netzwerk ein Spanning-Tree-Algorithmus als Netzwerkprotokoll verwenden.

Die Druckschrift "Redundancy Ethernet in Industrial Automatation" (K. Hansen, 10th IEEE International Conference on Emerging Technologies and Factory Automation, 22. September 2005) offenbart Ethernet-Netzwerke für industrielle Anwendungen.

In der praktischen Anwendung werden ringförmige Industrie-LANs mit maschenförmigen Office-LANs über Datenlinks miteinander verbunden. Um die Ausfallsicherheit derart verbundener Netzwerke zu erhöhen, ist es bekannt, zwei redundante Datenlinks zwischen den beiden Netzwerken einzurichten, von denen lediglich ein erster redundanter Datenlink zum Datenaustausch zwischen den beiden Netzwerken aktiviert ist, während der zweite redundante Datenlink blockiert ist und als Backup-Datenlink lediglich im Versagensfall anstelle des aktivierten ersten Datenlinks aktiviert wird. Nachteilig hierbei ist die Tatsache, dass der Umschaltvorgang zur Aktivierung des blockierten zweiten Datenlinks vergleichsweise viel Zeit in Anspruch nimmt und bei Einsatz der standardisierten Routinen von RSTP im Office-LAN ca. 30 Sekunden dauert.

Aus diesem Grund wäre es wünschenswert über ein Verfahren zur Rekonfiguration eines ein Office-LAN und ein Industrie-LAN umfassenden Kommunikationsnetzwerks zu verfügen, das gegenüber den herkömmlichen Verfahren eine schnellere Rekonfiguration bei Ausfall eines die beiden LANs verbindenden redundanten Datenlinks ermöglicht.

Diese Aufgabe wird erfindungsgemäß durch ein Verfahren zum Rekonfigurieren eines paketvermittelten Kommunikationsnetzwerks mit den Merkmalen von Patentanspruch 1 gelöst. Vorteilhafte Ausgestaltungen der Erfindung sind durch die Merkmale der Unteransprüche angegeben.

Zur Lösung der Aufgabe ist erfindungsgemäß ein Verfahren zum Rekonfigurieren eines paketvermittelten Kommunikationsnetzwerks gezeigt, welches ein (durch Brücken geswitchtes) erstes Netzwerk und ein (durch Brücken geswitchtes) zweites Netzwerk umfasst, die über zwei redundante Datenlinks miteinander verbunden sind, von denen jeweils nur einer für den Nutzdatenaustausch aktiviert ist. Hier und im Weiteren werden als "redundante Datenlinks" die die beiden Netzwerke verbindenden Datenlinks bezeichnet. Die Netzknoten des Kommunikationsnetzwerks werden hier als "Brücken" bezeichnet. Gleichwohl kann es sich im Sinne der Erfindung auch um Schalter (Switches = Multiport-Brücken) oder andere zur Vermittlung geeignete Netzknoten handeln.

Bei den zwei redundanten Datenlinks handelt es sich um einen voreinstellbar aktivierbaren bzw. aktivierten und für den Nutzdatenaustausch eingesetzten ersten redundanten Datenlink und einen voreinstellbar inaktivierbaren bzw. inaktivierten zweiten redundanten Datenlink, der bei Ausfall des ersten redundanten Datenlinks für den Nutzdatenaustausch eingesetzt werden kann.

Die beiden redundanten Datenlinks verbinden jeweils eine Brücke des ersten Netzwerks und eine Brücke des zweiten Netzwerks datentechnisch miteinander. Jede Brücke des zweiten Netzwerks kann hierbei jeweils mit einer separaten Brücke des ersten Netzwerks verbunden sein. Gleichermaßen ist es möglich, dass mehrere Brücken des zweiten Netzwerks mit verschiedenen Ports einer selben Brücke des ersten Netzwerks verbunden sind bzw. dass mehrere Brücken des ersten Netzwerks mit verschiedenen Ports einer selben Brücke des zweiten Netzwerks verbunden sind.

Die mit dem ersten redundanten Datenlink verbundene Brücke des zweiten Netzwerks wird hier und im Weiteren als "erste Brücke" bezeichnet. Die mit dem zweiten redundanten Datenlink verbundene Brücke des zweiten Netzwerks wird hier und im Weiteren als "zweite Brücke" bezeichnet.

Das erste Netzwerk des Kommunikationsnetzwerks kann insbesondere als Office-LAN in einer Büroumgebung installiert sein. Für das erste Netzwerk ist ein erstes Netzwerkprotokoll für den Datenaustausch eingerichtet. Als erstes Netzwerkprotokoll wird im ersten Netzwerk vorzugsweise RSTP gemäß IEEE-Norm 802.1w eingesetzt, welches eine logische Topologie in Form eines Spannbaums auf der physischen Topologie des ersten Netzwerks ausbildet. Das erste Netzwerk weist vorzugsweise eine vermaschte oder sternförmige physische Topologie auf.

Das zweite Netzwerk des Kommunikationsnetzwerks kann insbesondere als Industrie-LAN in einer industriellen Umgebung installiert sein und setzt für den Datenaustausch ein insbesondere auf dem Ethernet-Standard basierendes zweites Netzwerkprotokoll ein, welches ein Standard- oder proprietäres Netzwerkprotokoll sein kann. Das Netzwerkprotokoll des zweiten Netzwerks ist von dem ersten Netzwerkprotokoll, insbesondere RSTP, verschieden. Das zweite Netzwerk weist vorzugsweise eine ringförmige Topologie auf.

Das erfindungsgemäße Verfahren zur Rekonfiguration des Kommunikationsnetzwerks umfasst die folgenden Schritte:
Erfassen eines Ausfalls des (voreingestellt) aktivierten ersten redundanten Datenlinks durch die mit dem ersten redundanten Datenlink verbundene erste Brücke des zweiten Netzwerks. Der Ausfall des ersten redundanten Datenlinks kann beispielsweise durch einen fehlenden Empfang eines von der mit dem ersten redundanten Datenlink verbundenen Brücke des ersten Netzwerks gesendeten Signals durch die erste Brücke erfasst werden ("Loss-of-Signal"). Die erste Brücke ist zu diesem Zweck mit einer Einrichtung zur Erfassung eines fehlenden Signalempfangs (Hardware-Detektor) ausgerüstet. Hierdurch kann insbesondere ein so genannter Hardware-Alarm der ersten Brücke ausgelöst werden.

Nach Erfassen des Ausfalls des ersten redundanten Datenlinks durch die erste Brücke: Generieren eines ersten Datenpakets (N1) durch die erste Brücke und Übertragen des ersten Datenpakets (N1) an die mit dem zweiten redundanten Datenlink verbundene zweite Brücke des zweiten Netzwerks. Vorteilhaft wird das erste Datenpaket (N1) mittels des zweiten Netzwerkprotokolls von der ersten Brücke des zweiten Netzwerks an die zweite Brücke des zweiten Netzwerks übertragen.

Anschließend Empfangen und Verarbeiten des ersten Datenpakets durch die zweite Brücke, wobei das erste Datenpaket logische Informationen enthält, durch welche die wenigstens teilweise Ausführung des ersten Netzwerkprotokolls, insbesondere RSTP, auf einem mit dem zweiten redundanten Datenlink verbundenen Port der zweiten Brücke ausgelöst wird.

Aktivierung des zweiten redundanten Datenlinks durch das auf dem Port der zweiten Brücke ausgeführte erste Netwerkprotokoll, insbesondere RSTP. Eine Aktivierung des zweiten redundanten Datenlinks erfolgt vorzugsweise durch Ausführen eines in RSTP festgelegten Handshake-Mechanismus zwischen dem RSTP-Port der mit dem inaktivierten zweiten redundanten Datenlink verbundenen zweiten Brücke des zweiten Netzwerks und einer mit dem inaktivierten zweiten redundanten Datenlink verbundenen Brücke des ersten Netzwerks. Eine Aktivierung des inaktivierten zweiten redundanten Datenlinks erfolgt hierbei mittels in RSTP standardisierter Routinen.

Durch das erfindungsgemäße Verfahren kann gegenüber herkömmlichen Verfahren eine schnellere Rekonfiguration einer logischen Topologie bei Ausfall eines die beiden LANs verbindenden redundanten Datenlinks erreicht werden.

Bei einer vorteilhaften Ausgestaltung des erfindungsgemäßen Verfahrens umfasst dieses die folgenden weiteren Schritte:
Erfassen der Wiederherstellung des ausgefallenen ersten redundanten Datenlinks durch die erste Brücke des zweiten Netzwerks. Die Erfassung erfolgt beispielsweise durch ein wiedereinsetzendes Empfangen von Signalen, wie RSTP-Konfigurationsrahmen, durch die erste Brücke (Hardware-Detektor) des zweiten Netzwerks.

Nach Erfassen der Wiederherstellung des ersten redundanten Datenlinks: Generieren eines zweiten Datenpakets (N2) durch die erste Brücke und Übertragen des zweiten Datenpakets an die zweite Brücke des zweiten Netzwerks des zuvor aktivierten zweiten redundanten Datenlinks. Hierdurch wird die zweite Brücke über die Wiederherstellung des ersten redundanten Datenlinks informiert.

Empfangen und Verarbeiten des zweiten Datenpakets durch die zweite Brücke, wobei das zweite Datenpaket logische Informationen enthält, durch welche eine wenigstens teilweise Beendigung der Ausführung von RSTP auf dem mit dem zweiten redundanten Datenlink verbundenen RSTP-Port der zweiten Brücke des zweiten Netzwerks bewirkt wird. Alternativ kann auch eine Beendigung des Aussendens von RSTP-Konfigurationsrahmen (Hello-Signale) mittels der zweiten Brücke über den aktivierten redundanten zweiten Datenlink bewirkt werden.

Anschließend erfolgt eine Aktivierung des wiederhergestellten ersten redundanten Datenlinks und eine Inaktivierung des aktivierten zweiten redundanten Datenlinks.

Hierdurch kann in vorteilhafter Weise eine schnelle Rekonfiguration einer logischen Topologie bei Wiederherstellung des ersten redundanten Datenlinks erreicht werden.

Zur Aktivierung des ersten redundanten Datenlinks und zur Inaktivierung des zweiten redundanten Datenlinks umfasst das erfindungsgemäße Verfahren nach Erfassen der Wiederherstellung des ausgefallenen ersten redundanten Datenlinks durch die erste Brücke vorteilhaft die Schritte:
Wenigstens teilweise Ausführung des ersten Netzwerkprotokolls, insbesondere RSTP, auf einem mit dem ersten redundanten Datenlink verbundenen Port der ersten Brücke. Eine Aktivierung des ersten redundanten Datenlinks erfolgt im Falle von RSTP vorzugsweise durch Ausführen eines in RSTP festgelegten Handshake-Mechanismus zwischen dem RSTP-Port der mit dem inaktivierten ersten redundanten Datenlink verbundenen ersten Brücke des zweiten Netzwerks und einer mit dem inaktivierten ersten redundanten Datenlink verbundenen Brücke des ersten Netzwerks. Eine Aktivierung des inaktivierten ersten redundanten Datenlinks erfolgt hierbei mittels in RSTP standardisierter Routinen. Zudem erfolgt ein Weiterleiten eines während des obigen Handshake-Mechanismus erzeugten RSTP-Konfigurationsrahmens durch die erste Brücke an die mit dem zweiten redundanten Datenlink verbundene Brücke des ersten Netzwerks zur Inaktivierung des zweiten redundanten Datenlinks. Eine Inaktivierung des aktivierten zweiten redundanten Datenlinks erfolgt hierbei mittels in RSTP standardisierter Routinen.

Beendigung der Ausführung des ersten Netzwerkprotokolls, insbesondere RSTP, auf dem mit dem ersten redundanten Datenlink verbundenen Port der ersten Brücke.

Hierdurch kann eine besonders schnelle Rekonfiguration einer logischen Topologie bei Wiederherstellung des ersten redundanten Datenlinks erreicht werden.

Die Erfindung erstreckt sich ferner auf ein wie oben beschriebenes paketvermitteltes Kommunikationsnetzwerk mit einem ein erstes Netzwerkprotokoll einsetzenden ersten Netzwerk und einem ein von dem ersten Netzwerkprotokoll verschiedenes zweites Netzwerkprotokoll einsetzenden zweiten Netzwerk, in welchem die beiden Netzwerke durch zwei redundante Datenlinks miteinander verbunden sind, von denen jeweils nur einer zum Nutzdatenaustausch aktiviert ist. In dem Kommunikationsnetzwerk sind die Brücken, insbesondere die mit einem redundanten Datenlink verbundenen Brücken des zweiten Netzwerks, jeweils so eingerichtet sind, dass ein wie oben beschriebenes Verfahren ausführbar ist.

Des Weiteren erstreckt sich die Erfindung auf eine Brücke eines wie oben beschriebenen paketvermittelten Kommunikationsnetzwerks.

Die Erfindung wird nun anhand eines Ausführungsbeispiels näher erläutert, wobei Bezug auf die beigefügten Zeichnungen genommen wird. Es zeigen:

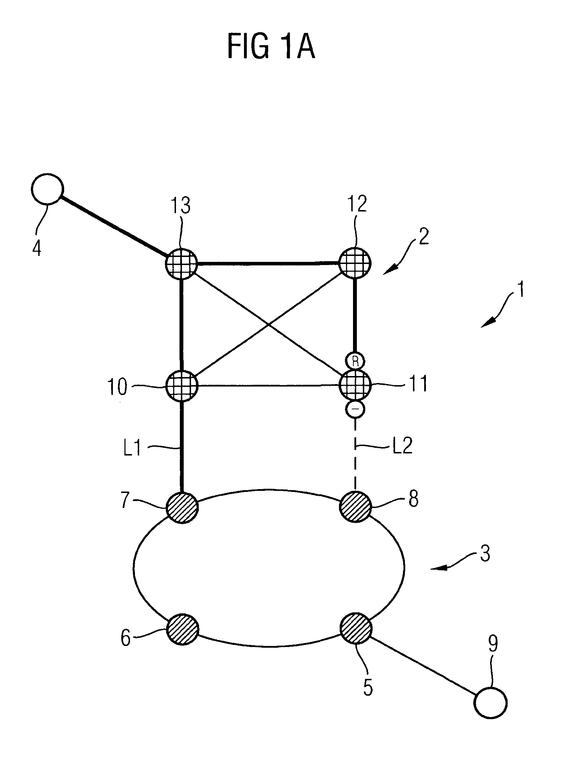

- Fig. 1A-1C: schematische Darstellungen zur Veranschaulichung eines Ausführungsbeispiels des erfindungsgemäßen Verfahrens zur Rekonfiguration eines Kommunikationsnetzwerks.

In den Fig. 1A-1C ist in schematischer Weise ein Ausführungsbeispiel des erfindungsgemäßen Kommunikationsnetzwerks gezeigt. Das insgesamt mit der Bezugszahl 1 bezeichnete Kommunikationsnetzwerk umfasst ein in einer Büroumgebung installiertes, maschenförmiges Office-LAN 2 und ein in einer industriellen Umgebung installiertes, ringförmiges Industrie-LAN 3.

Die physische Topologie des Office-LAN 2 umfasst vier RSTP-Brücken 10, 11, 12, 13, die über jeweilige Punkt-zu-Punkt Verbindungsleitungen (Datenlinks) in maschiger Form miteinander vernetzt sind. In den Figuren sind die Datenlinks mittels durchgezogener Linien dargestellt und ansonsten nicht näher bezeichnet. Lediglich beispielhaft ist ein Teilnehmer 4 (Sender/Empfänger) dargestellt, welcher über einen Datenlink mit einer der Brücken, hier Brücke 13, an das Office-LAN 2 angebunden ist.

Das Office-LAN 2 setzt das gemäß IEEE-Norm 802.1w standardisierte Netzwerkprotokoll RSTP ein. RSTP bildet auf der durch die Datenlinks vorgegebenen physischen Topologie des Office-LAN 2 eine logische Topologie in Form eines Spannbaums aus, welcher ausschließlich für den Austausch von Nutzdaten eingesetzt wird. Die zum Spannbaum gehörenden Datenlinks sind in den Figuren mit dickeren Linien eingezeichnet. Die nicht zum Spannbaum gehörenden Datenlinks sind für den Nutzdatenaustausch blockiert, können jedoch aktiviert werden.

RSTP weist allen Brücken und Ports des Office-LAN 2 eindeutige Identifikatoren (IDs) und Pfadkosten zu. In RSTP erfassen die Brücken die logische Topologie des Netzwerks mittels der durch sie hindurchgehenden Datenpakete (Datenrahmen) selbsttätig, indem sie die Schicht-2-Adressen des Netzwerks (MAC-Adressen, MAC = Medium Access Control) der Brücken nutzen.

Die Ports der Brücken können verschiedene Zustände einnehmen, insbesondere einen Zustand "Blocking", in dem nur Konfigurationsrahmen, BPDUs (BPDU = Bridge Protocol Data Unit) genannt, von den Brücken akzeptiert werden, einen Zustand "Listening", während dem die aktive logische Topologie in Form eines Spannbaums gebildet wird, einen Zustand "Learning", während dessen eine Bridging-Tabelle aus den gelesenen MAC-Adressen zusammengestellt wird, einen Zustand "Forwarding", in dem die Ports BPDUs und Nutzdaten weiterleiten, und einen Zustand "Disabled", in dem die Ports weder Nutzdaten noch BPDUs empfangen oder weiterleiten. Mit Hilfe der in den BPDUs enthaltenen Informationen können die Brücken die Zustände ihrer Ports ändern.

Jede BPDU enthält eine Reihe von Feldern, wie ein Flagfeld zum Anzeigen oder Bestätigen einer Topologieänderung, ein Rootbrücken-ID-Feld zur Identifizierung der Rootbrücke mit Angabe von Priorität und ID, ein Pfadkostenfeld zur Angabe der Pfadkosten der die BPDU sendenden Rootbrücke, ein Meldungsalterfeld (MessAge) zur Angabe des Zeitraums seit Aussenden der BPDU, ein MaxAge-Feld zur Angabe einer Zeitspanne nach deren Ablauf die Meldung gelöscht werden soll, ein Hello-Zeit-Feld zur Angabe der Zeitspanne zwischen regelmäßigen Konfigurationsmeldungen (Hello-Signale) der Rootbrücke, und ein Vorwärtsverzögerungsfeld, das die Wartezeit nach einer Änderung der Topologie angibt.

Um eine schleifenfreie logische Topologie zu bilden, werden in STP vier Kriterien zur Bestimmung der höchsten Prioritäten der Brücken beziehungsweise deren Ports verwendet. Dies sind: die kleinste Rootbrücken-ID, die geringsten Pfadkosten zur Rootbrücke, die kleinste Sendebrücken-ID und die kleinste Port-ID.

Um eine Rootbrücke zu ermitteln, gehen in RSTP alle Ports der Brücken nach der Initialisierung (beispielsweise nach einem Neustart des Netzwerks) in den Zustand "Blocking", wobei jede Brücke zunächst annimmt, dass sie selbst eine Rootbrücke ist und eine entsprechende BPDU mit ihrer eigenen ID als Rootbrücken-ID an die anderen Brücken sendet. Anschließend wird die Brücke mit der niedrigsten Rootbrücken-ID zur Rootbrücke gewählt. Bei identischen Rootbrücken-IDs wird als ergänzendes Kriterium die niedrigste MAC-Adresse heran gezogen.

Von der gewählten Rootbrücke aus werden anschließend alle Netzwerkpfade des Spannbaums festgelegt, über den ein Datenaustausch zwischen den Brücken im Office-LAN 2 erfolgen soll. Hierzu sendet die Rootbrücke zunächst BPDUs an die anderen Brücken. Jede Brücke bestimmt daraufhin als Root-Port einen Port, der die geringsten Pfadkosten zur Rootbrücke hat. Im Falle gleicher Pfadkosten wird als ergänzendes Kriterium die Port-ID heran gezogen. Anschließend werden auf Basis der Pfadkosten Designate-Ports bestimmt und die designierten Brücken des Spannbaums bestimmt.

In RSTP teilt die Rootbrücke allen Brücken im Spannbaum in regelmäßigen Abständen über eine BPDU (Hello-Signal) mit, dass sie noch da ist. Falls ein solches Hello-Signal ausbleibt, etwa aufgrund des Ausfalls eines Links oder der Rootbrücke selbst, ist eine Rekonfiguration (Rekonvergenz) des Netzwerks zur Ermittlung eines neuen Spannbaums erforderlich. Da in dieser Zeit lediglich BPDUs, d. h. Datenpakete zur Ermittlung eines neuen Spannbaums übermittelt werden, ist das Netzwerk für diese Zeitspanne für einen Nutzdatenaustausch nicht verwendbar.

In RSTP werden zudem alternative Ports ermittelt, welche BPDUs von anderen Brücken blockieren und einen alternativen Weg zur Rootbrücke bieten, falls der Root-Port ausfällt.

In RSTP ist weiterhin ein Proposal/Agreement Handshake-Mechanismus zwischen direkt verbundenen Brücken implementiert. Über den Proposal/Agreement Handshake-Mechanismus senden über einen Datenlink unmittelbar verbundene RSTP-Brücken von sich aus in vorgebbaren zeitlichen Abständen BPDUs. In RSTP ist festgelegt, dass eine Brücke ihren Datenlink zu einer Nachbarbrücke verliert, wenn sie innerhalb einer vorgebbaren Zeitspanne eine Mehrzahl BPDUs nicht empfangen kann. Auf diese Weise kann ein Ausfall eines Datenlinks schnell erkannt werden.

Die Topologie des Industrie-LAN 3 umfasst vier Brücken 5, 6, 7, 8 die über jeweilige Punkt-zu-Punkt Datenlinks ringförmig miteinander verbunden sind. In den Figuren sind die Datenlinks zwischen den Brücken mit einer durchgezogenen Linie dargestellt und ansonsten nicht näher bezeichnet. Lediglich beispielhaft ist ein Teilnehmer 9 (Sender/Empfänger) dargestellt, der über einen Datenlink mit einer der Brücken, hier Brücke 5, verbunden ist.

Das Industrie-LAN 3 setzt ein auf dem Ethernet-Standard basierendes proprietäres Netzwerkprotokoll ein, welches von dem Netzwerkprotokoll (RSTP) des Office-LAN 2 verschieden ist. Die Brücken 5, 6, 7, 8 werden deshalb im Unterschied zu den RSTP-Brücken des Office-LAN 2 hier und im Weiteren als "proprietäre Brücken" des Industrie-LAN 3 bezeichnet.

Das Office-LAN 2 und das Industrie-LAN 3 sind über zwei redundante Datenlinks L1, L2 datentechnisch miteinander verbunden, wobei lediglich ein in Fig. 1A mit einer durchgezogenen Linie dargestellte erster redundanter Datenlink L1 für den Nutzdatenaustausch zwischen den beiden Netzwerken voreingestellt aktiviert ist. Der in Fig. 1A mit einer unterbrochenen Linie gezeichnete zweite redundante Datenlink L2 ist für den Nutzdatenaustausch voreingestellt blockiert. Der zweite redundante Datenlink L2 dient lediglich als aktivierbare Verbindung (Backup-Link) zwischen den beiden Netzwerken 2, 3.

Der erste redundante Datenlink L1 ist mit einem RSTP-Port der RSTP-Brücke 10 des Office-LAN 2 und einem das proprietäre Netzwerkprotokoll einsetzenden "proprietären Port" der proprietären Brücke 7 des Industrie-LAN 3 verbunden. Beide mit dem ersten Datenlink L1 verbundene Ports sind aktiviert, wobei sich der RSTP-Port der RSTP-Brücke 10 des Office-LAN 2 in seinem Zustand "Forwarding" befindet.

Der zweite redundante Datenlink L2 ist mit einem RSTP-Port der RSTP-Brücke 11 des Office-LAN 2 und einem proprietären Port der proprietären Brücke 8 des Industrie-LAN 3 verbunden. Zur Blockierung des zweiten redundanten Datenlinks L2 ist der mit diesem verbundene RSTP-Port der RSTP-Brücke 11 des Office-LAN 2 in seinen Zustand "Blocking" versetzt, in welchem lediglich BPDUs jedoch keine Nutzdaten akzeptiert werden. Der blockierte RSTP-Port der RSTP-Brücke 11 ist in Fig. 1A durch ein umkreistes Minuszeichen veranschaulicht.

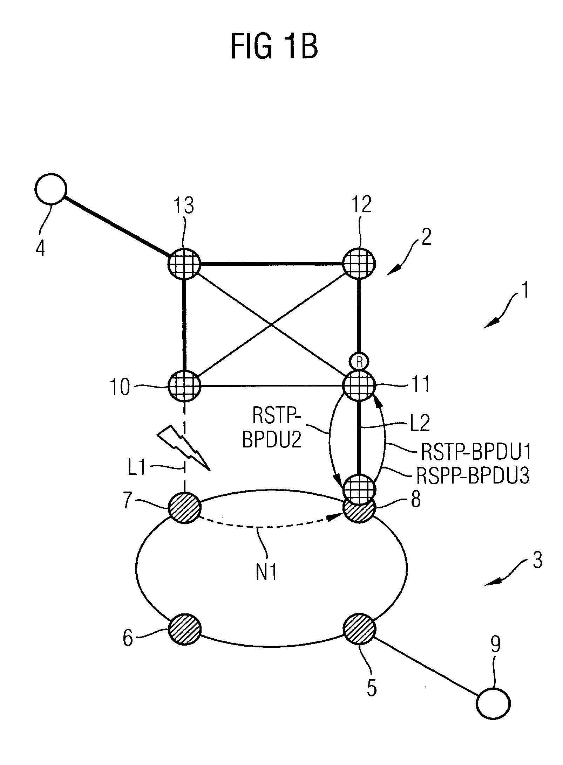

In Fig. 1B ist eine Situation dargestellt, in der, ausgehend von der in Fig. 1A dargestellten Situation mit einem aktivierten ersten redundanten Datenlink L1, der erste redundante Datenlink L1 ausfällt. Dies ist in Fig. 1B durch ein Blitzsymbol dargestellt. Zudem ist der erste redundante Datenlink L1 mit einer unterbrochenen Linie eingezeichnet. Hierbei geht der mit dem ersten redundanten Datenlink L1 verbundene RSTP-Port der RSTP-Brücke 10 des Office-LAN 2 in seinem Zustand "Blocking" über.

Der Ausfall des ersten redundanten Datenlinks L1 zwischen den beiden Netzwerken wird von der mit dem ersten Datenlink L1 verbundenen Brücke 7 des Industrie-LAN 3 erfasst. Eine Erfassung durch die Brücke 7 des Industrie-LAN 3 erfolgt beispielsweise durch einen fehlenden Signalempfang ("Loss of Signal") von Signalen, die von der mit dem ersten Datenlink L1 verbundenen Brücke 10 des Office-LAN 2 gesendet werden. In der mit dem ersten redundanten Datenlink L1 verbundenen proprietären Brücke 7 des Industrie-LAN 3 löst dies einen Hardware-Alarm aus, in dessen Folge ein erstes Datenpaket N1 von der Brücke generiert wird.

Das erste Datenpaket N1 wird anschließend mittels des proprietären Netzwerkprotokolls des Industrie-LAN 3 über den entsprechenden Datenlink des Industrie-LAN 3 an die mit dem zweiten redundanten Datenlink L2 verbundene proprietäre Brücke 8 des Industrie-LAN 3 gesendet, was in Fig. 1B durch einen Pfeil veranschaulicht ist. Durch das erste Datenpaket N1 wird die proprietäre Brücke 8 des Industrie-LAN 3 von der proprietären Brücke 7 des Industrie-LAN 3 darüber informiert, dass der aktivierte erste redundante Datenlink L1 ausgefallen ist. Zu diesem Zweck ist in dem ersten Datenpaket N1 beispielsweise ein Flag "Ausgefallener-erster-Datenlink" gesetzt.

Durch Empfang und Verarbeitung des ersten Datenpakets N1 durch die proprietäre Brücke 8 des Industrie-LAN 3 wird eine teilweise oder vollständige Ausführung des Netzwerkprotokolls RSTP gemäß IEEE-Norm 802.1w (nur) auf jenem Port der Brücke 8 ausgelöst, der mit dem blockierten zweiten redundanten Datenlink L2 verbunden ist. Hierdurch erscheint die proprietäre Brücke 8 des Industrie-LAN 3 dem Office-LAN 2 gegenüber als RSTP-Brücke. Dies ist in Fig. 1B durch die teilweise überlagerte Darstellung der proprietären Brücke 8 in der Art der Brücken des Office-LAN 2 und in der Art der Brücken des Industrie-LAN 3 symbolisch dargestellt.

Der proprietären Brücke 8 des Industrie-LAN 3 ist eine höchste Brücken-ID, d. h. niedrigste Priorität, aller RSTP-Brücken des Office-LAN 2 voreingestellt zugeordnet. Hierdurch ist sichergestellt, dass die proprietäre Brücke 8 in ihrer Eigenschaft als RSTP-Brücke mit aktiviertem RSTP-Port bei der Bildung eines Spannbaums des Office-LAN 2 nicht in unerwünschter Weise als neue Root-Brücke gewählt wird.

Anschließend generiert die nun mit einem RSTP-Port versehene proprietäre Brücke 8 des Industrie-LAN 3 einen ersten RSTP-Konfigurationsrahmen (RSTP-BPDU1) und sendet den ersten RSTP-Konfigurationsrahmen durch ihren mit dem zweiten redundanten Datenlink L2 verbundenen RSTP-Port an die mit dem zweiten redundanten Datenlink L2 verbundene RSTP-Brücke 11 des Office-LAN 2. Dies ist in Fig. 1B durch einen Pfeil veranschaulicht. Der Konfigurationsrahmen RSTP-BPDU1 ist im Rahmen des in RSTP implementierten Handshake-Mechanismus eine Vorschlagsmeldung (Proposal).

Nach Empfang und Verarbeitung des ersten RSTP-Konfigurationsrahmens durch die RSTP-Brücke 11 des Office-LAN 2 generiert die RSTP-Brücke 11 einen zweiten RSTP-Konfigurationsrahmen (RSTP-BPDU2) und sendet den zweiten RSTP-Konfigurationsrahmen an die proprietäre Brücke 8 des Industrie-LAN 3. Dies ist in Fig. 1B ebenso durch einen Pfeil veranschaulicht. Der zweite RSTP-Konfigurationsrahmen ist eine Vorschlagsmeldung (Proposal) zur Aktivierung des mit dem zweiten redundanten Datenlink L2 verbundenen, blockierten RSTP-Ports der Brücke 11 des Office-LAN 2.

Nach Empfang und Verarbeitung des zweiten RSTP-Konfigurationsrahmens generiert die proprietäre Brücke 8 des Industrie-LAN 3 einen dritten RSTP-Konfigurationsrahmen (RSTP-BPDU3) und sendet den dritten RSTP-Konfigurationsrahmen durch ihren mit dem zweiten redundanten Datenlink L2 verbundenen RSTP-Port an die mit dem zweiten redundanten Datenlink L2 verbundene RSTP-Brücke 11 des Office-LAN 2. Dies ist in Fig. 1B durch einen Pfeil veranschaulicht. Der dritte RSTP-Konfigurationsrahmen ist eine Einverständnismeldung (Agreement) zur Aktivierung des mit dem zweiten redundanten Datenlink L2 verbundenen, blockierten RSTP-Ports der Brücke 11 des Office-LAN 2.

Daraufhin wird der blockierte RSTP-Port der mit dem zweiten redundanten Datenlink L2 verbundenen RSTP-Brücke 11 des Office-LAN 2 in seinen Zustand "Forwarding" versetzt. Hierdurch wird der blockierte zweite redundante Datenlink L2 in seinen aktiven Zustand versetzt, so dass ein Nutzdatenaustausch zwischen den beiden Netzwerken 2, 3 über den zweiten redundanten Datenlink L2 ermöglicht ist.

Der oben aufgezeigte Handshake-Mechanismus zur Aktivierung des mit dem zweiten redundanten Datenlink L2 verbundenen, blockierten RSTP-Ports der RSTP-Brücke 11 des Office-LAN 2 erfolgt durch Routinen, die in der IEEE-Norm 802.1w standardisiert sind.

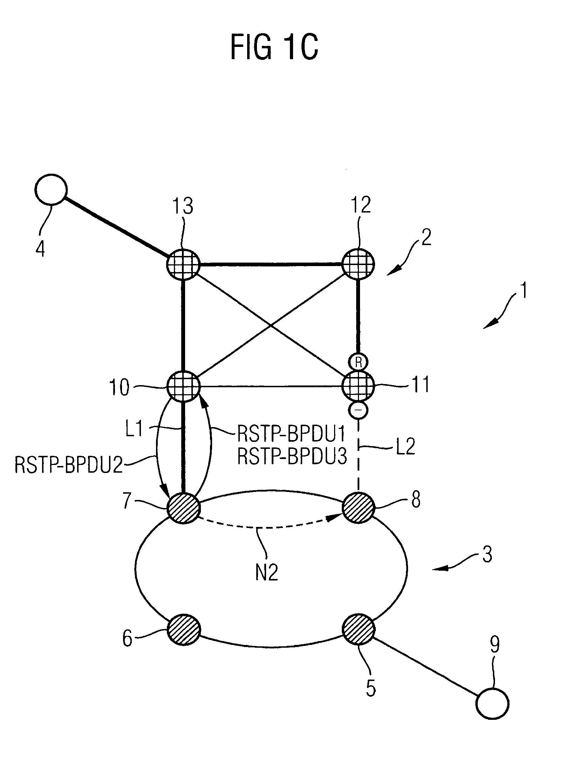

In Fig. 1C ist eine weitere Situation dargestellt, in der der erste redundante Datenlink L1 nach seinem Ausfall wiederhergestellt ist. Die mit dem ersten redundanten Datenlink L1 verbundene proprietäre Brücke 7 des Industrie-LAN 3 erkennt beispielsweise über nun wieder eintreffende Signale, welche von der mit dem ersten redundanten Datenlink L1 verbundenen Brücke 10 des Office-LAN 2 ausgesendet werden, den wiederherstellten ersten redundanten Datenlink L1.

Die Erfassung des wiederhergestellten ersten redundanten Datenlinks L1 durch die proprietäre Brücke 7 triggert die Generierung eines zweiten Datenpakets N2 durch die proprietäre Brücke 7. Das zweite Datenpaket N2 wird anschließend mittels des proprietären Netzwerkprotokolls des Industrie-LAN 3 über den entsprechenden Datenlink des Industrie-LAN 3 an die proprietäre Brücke 8 des aktivierten zweiten redundanten Datenlinks L2 gesendet, was in Fig. 1C durch einen Pfeil veranschaulicht ist.

Durch das zweite Datenpaket N2 wird die proprietäre Brücke 8 von der proprietären Brücke 7 darüber informiert, dass der erste redundante Datenlink L1 wiederhergestellt ist. Zu diesem Zweck ist in dem zweiten Datenpaket N2 beispielsweise ein Flag "Ausgefallener-erster-Datenlink" gelöscht.

Durch Empfang und Verarbeitung des zweiten Datenpakets N2 durch die proprietäre Brücke 8 des zweiten redundanten Datenlinks L2 wird eine Beendigung der Ausführung des Netzwerkprotokolls RSTP für den mit dem zweiten redundanten Datenlink L2 verbundenen Port der proprietären Brücke 8 ausgelöst. Der mit dem zweiten redundanten Datenlink L2 verbundene Port der proprietären Brücke 8 wird somit von einem RSTP-Port wieder zu einem von dem proprietären Netzwerkprotokoll des Industrie-LAN 3 gesteuerten Port geändert. Die proprietäre Brücke 8 erscheint dann dem Office-LAN 2 gegenüber nicht mehr als eine RSTP-Brücke. Alternativ ist es möglich, dass auf dem mit dem zweiten redundanten Datenlink L2 verbunden Port der proprietären Brücke 8 lediglich jene Teile von RSTP inaktiviert werden, welche das Aussenden von Konfigurations-BPDUs (Hello-Signale) auslösen.

Die Erfassung des wiederhergestellten ersten redundanten Datenlinks L1 durch die proprietäre Brücke 7 triggert weiterhin die teilweise oder vollständige Ausführung des Netzwerkprotokolls RSTP gemäß IEEE-Norm 802.1w (nur) auf jenem Port der proprietären Brücke 7, der mit dem blockierten ersten redundanten Datenlink L1 verbunden ist. Hierdurch erscheint die proprietäre Brücke 7 des Industrie-LAN 3 dem Office-LAN 2 gegenüber als RSTP-Brücke.

Daraufhin generiert die nun mit einem RSTP-Port versehene proprietäre Brücke 7 des Industrie-LAN 3 einen ersten RSTP-Konfigurationsrahmen (RSTP-BPDU1) und sendet den ersten RSTP-Konfigurationsrahmen durch ihren mit dem ersten redundanten Datenlink L1 verbundenen RSTP-Port an die mit dem ersten redundanten Datenlink L1 verbundene RSTP-Brücke 10 des Office-LAN 2. Dies ist in Fig. 1C durch einen Pfeil veranschaulicht. Der Konfigurationsrahmen RSTP-BPDU1 ist im Rahmen des in RSTP implementierten Handshake-Mechanismus eine Vorschlagsmeldung (Proposal).

Nach Empfang und Verarbeitung des ersten RSTP-Konfigurationsrahmens durch die RSTP-Brücke 10 des Office-LAN 2 generiert die RSTP-Brücke 10 einen zweiten RSTP-Konfigurationsrahmen (RSTP-BPDU2) und sendet den zweiten RSTP-Konfigurationsrahmen an die proprietäre Brücke 7 des Industrie-LAN 3. Dies ist in Fig. 1C ebenso durch einen Pfeil veranschaulicht. Der zweite RSTP-Konfigurationsrahmen ist eine Vorschlagsmeldung (Proposal) zur Aktivierung des mit dem ersten redundanten Datenlink L2 verbundenen, blockierten RSTP-Ports der Brücke 10 des Office-LAN 2.

Nach Empfang und Verarbeitung des zweiten RSTP-Konfigurationsrahmens generiert die proprietäre Brücke 7 des Industrie-LAN 3 einen dritten RSTP-Konfigurationsrahmen (RSTP-BPDU3) und sendet den dritten RSTP-Konfigurationsrahmen durch ihren mit dem ersten redundanten Datenlink L1 verbundenen RSTP-Port an die mit dem ersten redundanten Datenlink L1 verbundene RSTP-Brücke 10 des Office-LAN 2. Dies ist in Fig. 1C durch einen Pfeil veranschaulicht. Der dritte RSTP-Konfigurationsrahmen ist eine Einverständnismeldung (Agreement) zur Aktivierung des mit dem ersten redundanten Datenlink L1 verbundenen, blockierten RSTP-Ports der Brücke 10 des Office-LAN 2.

Daraufhin wird der blockierte RSTP-Port der mit dem ersten redundanten Datenlink L1 verbundenen RSTP-Brücke 10 des Office-LAN 2 in seinen Zustand "Forwarding" versetzt. Hierdurch wird der blockierte ersten redundante Datenlink L1 in seinen aktiven Zustand versetzt, so dass ein Nutzdatenaustausch zwischen den beiden Netzwerken 2, 3 ermöglicht ist.

Der oben aufgezeigte Handshake-Mechanismus zur Aktivierung des mit dem ersten redundanten Datenlink L1 verbundenen, blockierten RSTP-Ports der RSTP-Brücke 10 des Office-LAN 2 erfolgt durch Routinen, die in der IEEE-Norm 802.1w standardisiert sind.

Weiterhin wird der von proprietären Brücke 7 des Industrie-LAN 3 empfangene zweite RSTP-Konfigurationsrahmen (RSTP-BPDU2) unverändert an die mit dem mit dem zweiten redundanten Datenlink L2 verbundene proprietäre Brücke 8 weitergeleitet. Eine Weiterleitung erfolgt hierbei durch das proprietäre Netzwerkprotokoll des Industrie-LAN 3. Nach Empfang leitet die mit dem zweiten redundanten Datenlink L2 verbundene proprietäre Brücke 8 den zweiten RSTP-Konfigurationsrahmen (RSTP-BPDU2) unverändert an die mit dem zweiten redundanten Datenlink L2 verbundene RSTP-Brücke 11 des Office-LAN 2 weiter. Daraufhin wird der sich im Zustand "Forwarding" befindliche RSTP-Port der mit dem zweiten redundanten Datenlink L2 verbundenen RSTP-Brücke 11 des Office-LAN 2 in seinen Zustand "Blocking" versetzt, so dass der zweite redundante Datenlink L2 inaktiviert wird.

Anschließend, nach Aktivierung des ersten redundanten Datenlinks L1 und nach Weiterleitung des zweiten RSTP-Konfigurationsrahmens (RSTP-BPDU2) durch die proprietäre Brücke 7 des Industrie-LAN 3, wird eine Beendigung der Ausführung des Netzwerkprotokolls RSTP für den mit dem ersten redundanten Datenlink L1 verbundenen Port der proprietären Brücke 7 ausgelöst. Der mit dem ersten redundanten Datenlink L1 verbundene Port der proprietären Brücke 7 wird somit von einem RSTP-Port wieder zu einem von dem proprietären Netzwerkprotokoll des Industrie-LAN 3 gesteuerten Port geändert. Die proprietäre Brücke 7 erscheint dann dem Office-LAN 2 gegenüber nicht mehr als eine RSTP-Brücke.

## Patentansprüche

1. Verfahren zum Rekonfigurieren eines paketvermittelten Kommunikationsnetzwerks (1) mit einem ein erstes Netzwerkprotokoll einsetzenden ersten Netzwerk (2) und einem ein von dem ersten Netzwerkprotokoll verschiedenes zweites Netzwerkprotokoll einsetzenden zweiten Netzwerk (3), in welchem die beiden Netzwerke (2, 3) durch zwei redundante Datenlinks (L1, L2) miteinander verbunden sind, von denen jeweils nur einer zum Nutzdatenaustausch aktiviert ist, wobei die zwei Datenlinks (L1, L2) jeweils mit einer Brücke (7, 8) des zweiten Netzwerks (2) verbunden sind, und wobei ein erster redundanter Datenlink (L1) voreingestellt aktiviert und ein zweiter redundanter Datenlink (L2) voreingestellt inaktiviert ist, wobei ein Datenlink (L1, L2) durch zumindest teilweises Ausführen des ersten Netzwerkprotokolls auf einem mit dem Datenlink (L1,L2) verbundenen Port der jeweiligen Brücke (7, 8) des zweiten Netzwerks (2) aktiviert wird, **gekennzeichnet durch** die Schritte:
- Erfassen eines Ausfalls des ersten redundanten Datenlinks (L1) **durch** eine mit dem ersten redundanten Datenlink (L1) verbundene erste Brücke (7) des zweiten Netzwerks (3);
- Generieren eines ersten Datenpakets (N1) **durch** die erste Brücke (7) des zweiten Netzwerks (3) und Übertragen des ersten Datenpakets (N1) an eine mit dem zweiten redundanten Datenlink (L2) verbundene zweite Brücke (8) des zweiten Netzwerks (3);
- Empfangen und Verarbeiten des ersten Datenpakets (N1) durch die zweite Brücke (8) des zweiten Netzwerks (3), wobei das erste Datenpaket (N1) logische Informationen enthält, **durch** welche die wenigstens teilweise Ausführung des ersten Netzwerkprotokolls auf einem mit dem zweiten redundanten Datenlink (L2) verbundenen Port der zweiten Brücke (8) und eine Aktivierung des zweiten redundanten Datenlinks (L2) **durch** das auf dem Port der zweiten Brücke (8) ausgeführte erste Netzwerkprotokoll ausgelöst wird.

2. Verfahren nach Anspruch 1 bei welchem ein Erfassen eines Ausfalls des ersten redundanten Datenlinks (L1) durch die mit dem ersten Datenlink (L1) verbundene erste Brücke (7) des zweiten Netzwerks (3) anhand eines von der ersten Brücke (7) des zweiten Netzwerks (3) nicht mehr empfangenen Signals von der mit der mit dem ersten Datenlink (L1) verbundenen Brücke (10) des ersten Netzwerks (2) erfolgt.

3. Verfahren nach einem der Ansprüche 1 bis 2, bei welchem als erstes Netzwerkprotokoll RSTP gemäß IEEE-Norm 802.1w eingesetzt wird.

4. Verfahren nach Anspruch 3, bei welchem die Aktivierung des zweiten redundanten Datenlinks (L2) durch Ausführen eines in RSTP implementierten Handshake-Mechanismus zwischen den mit dem zweiten redundanten Datenlink (L2) direkt verbundenen Brücken (8, 11) erfolgt.

5. Verfahren nach einem der Ansprüche 1 bis 4, bei welchem das erste Datenpaket (N1) mittels des zweiten Netzwerkprotokolls von der ersten Brücke (7) des zweiten Netzwerks (3) an die zweite Brücke (8) des zweiten Netzwerks (3) übertragen wird.

6. Verfahren nach einem der Ansprüche 1 bis 5, **gekennzeichnet durch** die folgenden Schritte:
- Erfassen der Wiederherstellung des ausgefallenen ersten redundanten Datenlinks (L1) **durch** die erste Brücke (7);
- Generieren eines zweiten Datenpakets (N2) **durch** die erste Brücke (7) und Übertragen des zweiten Datenpakets an die zweite Brücke (8) des zweiten Netzwerks (3);
- Empfangen und Verarbeiten des zweiten Datenpakets (N2) durch die zweite Brücke (8), wobei das zweite Datenpaket logische Informationen enthält, **durch** welche eine wenigstens teilweise Beendigung der Ausführung des ersten Netzwerkprotokolls, insbesondere RSTP, auf dem mit dem zweiten redundanten Datenlink (L2) verbundenen Port der zweiten Brücke (8) oder eine Beendigung des Aussendens von Konfigurationsrahmen über den zweiten redundanten Datenlink (L2) bewirkt wird;
- Aktivierung des ersten redundanten Datenlinks (L1);
- Inaktivierung des zweiten redundanten Datenlinks (L2).

7. Verfahren nach Anspruch 6, bei welchem nach Erfassen der Wiederherstellung des ausgefallenen ersten redundanten Datenlinks (L1) eine wenigstens teilweise Ausführung des ersten Netzwerkprotokolls, insbesondere RSTP, auf einem mit dem ersten redundanten Datenlink (L1) verbundenen Port der ersten Brücke (7) erfolgt.

8. Verfahren nach Anspruch 7, bei welchem eine Aktivierung des ersten redundanten Datenlinks (L1) durch Ausführen eines in RSTP implementierten Handshake-Mechanismus zwischen den mit dem ersten redundanten Datenlink (L1) direkt verbundenen Brücken (7, 10) erfolgt.

9. Verfahren nach Anspruch 8, bei welchem zur Inaktivierung des zweiten redundanten Datenlinks (L2) ein während des Handshake-Mechanismus erzeugter Konfigurationsrahmen durch die erste Brücke (7) an die mit dem zweiten redundanten Datenlink (L2) verbundene Brücke (11) des ersten Netzwerks (2) weitergeleitet wird.

10. Verfahren nach einem der Ansprüche 7 bis 9, bei welchem nach Aktivierung des ersten redundanten Datenlinks (L1) eine wenigstens teilweise Beendigung der Ausführung des ersten Netzwerkprotokolls, insbesondere RSTP, auf dem mit dem ersten redundanten Datenlink (L1) verbundenen Port der ersten Brücke (7) erfolgt.

11. Paketvermitteltes Kommunikationsnetzwerk (1), mit einem ein erstes Netzwerkprotokoll einsetzenden ersten Netzwerk (2) und einem ein von dem ersten Netzwerkprotokoll verschiedenes zweites Netzwerkprotokoll einsetzenden zweiten Netzwerk (3), in welchem die beiden Netzwerke (2, 3) durch zwei redundante Datenlinks (L1, L2) miteinander verbunden sind, von denen jeweils nur einer zum Nutzdatenaustausch aktiviert ist, wobei die zwei Datenlinks (L1, L2) jeweils mit einer Brücke (7, 8) des zweiten Netzwerks (2) verbunden sind, und wobei ein erster redundanter Datenlink (L1) voreingestellt aktiviert und ein zweiter redundanter Datenlink (L2) voreingestellt inaktiviert ist, wobei ein Datenlink (L1, L2) durch zumindest teilweises Ausführen des ersten Netzwerkprotokolls auf einem mit dem Datenlink (L1,L2) verbundenen Port der jeweiligen Brücke (7, 8) des zweiten Netzwerks (2) aktiviert wird, und wobei die Brücken (7, 8; 10, 11) des Kommunikationsnetzwerks (1) jeweils so eingerichtet sind, dass ein Verfahren nach einem der Ansprüche 1 bis 10 ausführbar ist.

## Claims

1. Method for the reconfiguration of a packet-switched communications network (1) with a first network (2) employing a first network protocol and a second network (3) employing a second network protocol which differs from the first network protocol, in which the two networks (2, 3) are connected together by two redundant data links (L1, L2), of which in each case only one is activated for the exchange of payload data, wherein the two data links (L1, L2) are connected respectively by a bridge (7, 8) of the second network (2), and wherein a first redundant data link (L1) is initialized as activated and a second redundant data link (L2) is initialized as inactivated, wherein a data link (L1, L2) is activated by at least partial execution of the first network protocol on a port of the respective bridge (7, 8) of the second network (2) connected to the data link (L1, L2), **characterised by** the steps:
- detection of a failure of the first redundant data link (L1) by a first bridge (7) of the second network (3) connected to the first redundant data link (L1);
- generation of a first data packet (N1) by the first bridge (7) of the second network (3) and transmission of the first data packet (N1) to a second bridge (8) of the second network (3) connected to a second redundant data link (L2);
- reception and processing of the first data packet (N1) by the second bridge (8) of the second network (3), wherein the first data packet (N1) contains logical information, by means of which the at least partial execution of the first network protocol is initiated on a port of the second bridge (8) connected to the second redundant data link (L2) and activation of the second redundant data link (L2) by the first network protocol executed on the port of the second bridge.

2. Method according to claim 1 in which a detection of a failure of the first redundant data link (L1) by the first bridge (7) of the second network (3) connected to the first data link (L1) takes place on the basis of a signal from the bridge (10) of the first network (2) connected to the first data link (L1) no longer being received by the first bridge (7) of the second network (3).

3. Method according to one of claims 1 to 2, in which RSTP according to IEEE Standard 802.1w is employed as the first network protocol.

4. Method according to claim 3, in which the activation of the second redundant data link (L2) takes place by means of the execution of a handshake mechanism implemented in RSTP between the bridges (8, 11) directly connected to the second redundant data link (L2).

5. Method according to one of claims 1 to 4, in which the first data packet (N1) is transmitted by means of the second network protocol from the first bridge (7) of the second network (3) to the second bridge (8) of the second network (3).

6. Method according to one of claims 1 to 5,
**characterised by** the following steps:
- detection of the restoration of the failed first redundant data link (L1) by the first bridge (7);
- generation of a second data packet (N2) by the first bridge (7) and transmission of the second data packet to the second bridge (8) of the second network (3);
- reception and processing of the second data packet (N2) by the second bridge (8), wherein the second data packet contains logical information, by means of which an at least partial termination of the execution of the first network protocol, in particular RSTP, on the port of the second bridge (8) connected to the second redundant data link (L2) or a termination of the transmission of configuration frameworks via the second redundant data link (L2) is initiated;
- activation of the first redundant data link (L1);
- inactivation of the second redundant data link (L2).

7. Method according to claim 6, in which after detection of the restoration of the failed first redundant data link (L1) an at least partial execution of the first network protocol, in particular RSTP, takes place on a port of the first bridge (7) connected to the first redundant data link (L1).

8. Method according to claim 7, in which an activation of the first redundant data link (L1) takes place by executing a handshake mechanism implemented in RSTP between the bridges (7, 10) directly connected to the first redundant data link (L1).

9. Method according to claim 8, in which for inactivation of the second redundant data link (L2) a configuration framework generated during the handshake mechanism is forwarded to the bridge (11) of the first network (2) connected to the second redundant data link (L2) by the first bridge (7).

10. Method according to one of claims 7 to 9, in which after activation of the first redundant data link (L1), an at least partial termination of the execution of the first network protocol, in particular RSTP, takes place on the port of the first bridge (7) connected to the first redundant data link (L1).

11. Packet-switched communications network (1), with a first network (2) employing a first network protocol and a second network (3) employing a second network protocol which differs from the first network protocol, in which the two networks (2, 3) are connected together by two redundant data links (L1, L2), of which in each case only one is activated for the exchange of payload data, wherein the two data links (L1, L2) are connected respectively by a bridge (7, 8) of the second network (2), and wherein a first redundant data link (L1) is initialized as activated and a second redundant data link (L2) is initialized as inactivated, wherein a data link (L1, L2) is activated by at least partial execution of the first network protocol on a port of the respective bridge (7, 8) of the second network (2) connected to the data link (L1, L2) and wherein the bridges (7, 8; 10, 11) of the communications network (1) are in each case set up in such a way that a method according to claims 1 to 10 can be executed.

## Revendications

1. Procédé de reconfiguration d'un réseau de communication par paquets (1), comportant un premier réseau (2) qui utilise un premier protocole de réseau et un deuxième réseau (3) qui utilise un deuxième protocole de réseau différent du premier protocole de réseau, et au sein duquel les deux réseaux (2, 3) sont reliés entre eux par deux liens de données redondants (L1, L2), dont respectivement un seul est activé pour l'échange de données utiles, les deux liens de données (L1, L2) étant reliés chacun à un pont (7, 8) du deuxième réseau (2) et un premier lien de données redondant (L1) étant activé par défaut et un deuxième lien de données redondant (L2) étant désactivé par défaut, un lien de données (L1, L2) étant activé par une exécution au moins partielle du premier protocole de réseau sur un port, relié au lien de données (L1, L2), du pont respectif (7, 8) du deuxième réseau (2), **caractérisé par** les étapes suivantes :
- détection d'une défaillance du premier lien de données redondant (L1) par un premier pont (7) du deuxième réseau (3) relié au premier lien de données redondant (L1) ;
- génération d'un premier paquet de données (N1) par le premier pont (7) du deuxième réseau (3) et transmission du premier paquet de données (N1) à un deuxième pont (8) du deuxième réseau (3) relié au deuxième lien de données redondant (L2) ;
- réception et traitement du premier paquet de données (N1) par le deuxième pont (8) du deuxième réseau (3), le premier paquet de données (N1) contenant des informations logiques par lesquelles sont déclenchées l'exécution au moins partielle du premier protocole de réseau sur un port du deuxième pont (8) relié au deuxième lien de données redondant (L2) et une activation du deuxième lien de données redondant (L2) par le premier protocole de réseau exécuté sur le port du deuxième pont (8).

2. Procédé selon la revendication 1, selon lequel une détection d'une défaillance du premier lien de données redondant (L1) par le premier pont (7) du deuxième réseau (3) relié au premier lien de données (L1) est effectuée à l'aide d'un signal, qui n'est plus reçu par le premier pont (7) du deuxième réseau (3), du pont (10) du premier réseau (2) relié au premier lien de données (L1).

3. Procédé selon l'une des revendications 1 à 2, selon lequel est utilisé, en tant que premier protocole de réseau, le RSTP selon la norme IEEE 802.1w.

4. Procédé selon la revendication 3, selon lequel l'activation du deuxième lien de données redondant (L2) est effectuée par l'exécution d'un mécanisme de protocole de transfert implémenté dans le RSTP entre les ponts (8, 11) directement reliés au deuxième lien de données redondant (L2).

5. Procédé selon l'une des revendications 1 à 4, selon lequel le premier paquet de données (N1) est transmis, au moyen du deuxième protocole de réseau, du premier pont (7) du deuxième réseau (3) au deuxième pont (8) du deuxième réseau (3).

6. Procédé selon l'une des revendications 1 à 5, **caractérisé par** les étapes suivantes :
- détection du rétablissement du premier lien de données redondant défaillant (L1) par le premier pont (7) ;
- génération d'un deuxième paquet de données (N2) par le premier pont (7) et transmission du deuxième paquet de données au deuxième pont (8) du deuxième réseau (3) ;
- réception et traitement du deuxième paquet de données (N2) par le deuxième pont (8), le deuxième paquet de données contenant des informations logiques par lesquelles est provoquée une cessation au moins partielle de l'exécution du premier protocole de réseau, et plus particulièrement du RSTP, sur le port du deuxième pont (8) relié au deuxième lien de données redondant (L2) ou une cessation de l'émission de trames de configuration via le deuxième lien de données redondant (L2) ;
- activation du premier lien de données redondant (L2) ;
- désactivation du deuxième lien de données redondant (L2).

7. Procédé selon la revendication 6, selon lequel, après la détection du rétablissement du premier lien de données redondant défaillant (L1), une exécution au moins partielle du premier protocole de réseau, et plus particulièrement du RSTP, est effectuée sur un port du premier pont (7) relié au premier lien de données redondant (L2).

8. Procédé selon la revendication 7, selon lequel une activation du premier lien de données redondant (L1) est effectuée par l'exécution d'un mécanisme de protocole de transfert implémenté dans le RSTP entre les ponts (7, 10) directement reliés au premier lien de données redondant (L1).

9. Procédé selon la revendication 8, selon lequel une trame de configuration générée pendant le mécanisme de protocole de transfert est retransmise, pour désactiver le deuxième lien de données redondant (L2), par le premier pont (7) au pont (11) du premier réseau (2) relié au deuxième lien de données redondant (L2).

10. Procédé selon l'une des revendications 7 à 9, selon lequel il se produit, après l'activation du premier lien de données redondant (L1), une cessation au moins partielle de l'exécution du premier protocole de réseau, et plus particulièrement du RSTP, sur le port du premier pont (7) relié au premier lien de données redondant (L1).

11. Réseau de communication par paquets (1), comportant un premier réseau (2) qui utilise un premier protocole de réseau et un deuxième réseau (3) qui utilise un deuxième protocole de réseau différent du premier protocole de réseau, et au sein duquel les deux réseaux (2, 3) sont reliés entre eux par deux liens de données redondants (L1, L2), dont respectivement un seul est activé pour l'échange de données utiles, les deux liens de données (L1, L2) étant reliés chacun à un pont (7, 8) du deuxième réseau (2), et un premier lien de données redondant (L1) étant activé par défaut et un deuxième lien de données redondant (L2) étant désactivé par défaut, un lien de données (L1, L2) étant activé par une exécution au moins partielle du premier protocole de réseau sur un port, relié au lien de données (L1, L2), du pont respectif (7, 8) du deuxième réseau (2), et les ponts (7, 8 ; 10, 11) du réseau de communication (1) étant respectivement configurés de manière telle qu'un procédé selon l'une des revendications 1 à 10 peut être exécuté.
